# EUROPEAN PATENT APPLICATION

(11) **EP 4 841 847 A1**
(43) Date of publication of application: **18.11.2026**
(21) Application number: 26178758.4
(22) Date of filing: 14.05.2026
(51) Int. Cl.: H02J 1/102, H02J 7/34

(54) **CONTROL METHOD AND APPARATUS FOR ENERGY STORAGE SUBSYSTEM OF DIRECT CURRENT MICROGRID**

(30) Priority: 16.05.2025 CN 202510641922
(71) Applicant: SCHNEIDER ELECTRIC INDUSTRIES SAS, 92500 Rueil-Malmaison (FR)
(72) Inventor: YANG, Yong, Shanghai, 201203 (CN); LI, Ganlin, Shanghai, 201203 (CN); FAN, Jianguo, Shanghai, 201203 (CN); YAN, Jianhai, Shanghai, 201203 (CN); YUAN, Xu, Shanghai, 201203 (CN)
(74) Representative: Openshaw & Co.

(57) **Abstract**

A control method and apparatus for an energy storage subsystem of a direct current microgrid are provided. The control method includes: detecting (301) an actual voltage and an actual current at a direct current bus side; detecting (302) an actual output voltage and an actual output current at a battery side; and controlling (303) a charging current of the battery, a charging voltage of the battery, a direct current bus current or a direct current bus voltage by controlling an on-time ratio of switching devices in a converter, based on the actual voltage and the actual current at the direct current bus side and the actual output voltage and the actual output current at the battery side.

## Description

### TECHNICAL FIELD

The present invention relates to a field of micro power grids, and more specifically, to a control method and an apparatus for an energy storage subsystem of a direct current microgrid.

### BACKGROUND

In a direct current micro power grid (or simply referred to as a direct current microgrid), a direct current bus connects a distributed power supply (e.g., a photovoltaic system, a wind energy system, etc.), an energy storage subsystem and a load. However, an output power fluctuation of the distributed power supply (e.g., a change of light intensity) and a dynamic change of the load (e.g., addition and removal of the load) will cause a fluctuation of a direct current bus voltage, which will lead to a failure of apparatuses in the system and even lead to a failure of a system.

Therefore, a scheme capable of controlling the stability of the direct current bus is required.

### SUMMARY

According to an embodiment of the present invention, there is provided a control method for an energy storage subsystem of a direct current microgrid, including: detecting an actual voltage and an actual current at a direct current bus side; detecting an actual output voltage and an actual output current at a battery side; and controlling a charging current of the battery, a charging voltage of the battery, a direct current bus current or a direct current bus voltage by controlling an on-time ratio of switching devices in a converter, based on the actual voltage and the actual current at the direct current bus side and the actual output voltage and the actual output current at the battery side.

In an example, the detecting the actual voltage at the direct current bus side includes detecting a voltage across a direct current bus capacitor as the actual voltage at the direct current bus side; and the detecting the actual current of the direct current bus includes detecting a current on the direct current bus as the actual current at the direct current bus side.

In an example, the controlling the charging current of the battery, the charging voltage of the battery, the direct current bus current or the direct current bus voltage by controlling an on-time ratio of the switching devices in a converter, based on the actual voltage and the actual current at the direct current bus side and the actual output voltage and the actual output current at the battery side includes: inputting the actual voltage at the direct current bus side to a direct current bus voltage control loop; inputting the actual current at the direct current bus side to a direct current bus current control loop; inputting the actual output voltage at the battery side to an energy storage voltage control loop; inputting the actual output current at the battery side to an energy storage current control loop; determining duty cycles of the switching devices in the converter based on one of the direct current bus voltage control loop, the direct current bus current control loop, the energy storage voltage control loop and the energy storage current control loop; and determining the on-time ratio of the switching devices in the converter based on the determined duty cycles to control a corresponding one of the charging current of the battery, the charging voltage of the battery, the direct current bus current and the direct current bus voltage.

In an example, a bus reference voltage of the direct current bus voltage control loop indicates a lowest acceptable bus voltage, a bus reference current of the direct current bus current control loop indicates a maximum acceptable bus current, a reference voltage of the energy storage voltage control loop indicates a highest acceptable battery voltage, and a reference current of the energy storage current control loop indicates a maximum acceptable battery current.

In an example, the determining the duty cycles of the switching devices in the converter based on one of the direct current bus voltage control loop, the direct current bus current control loop, the energy storage voltage control loop and the energy storage current control loop includes: determining output values of the direct current bus voltage control loop, the direct current bus current control loop, the energy storage voltage control loop and the energy storage current control loop; determining a minimum output value among the output values of the direct current bus voltage control loop, the direct current bus current control loop, the energy storage voltage control loop and the energy storage current control loop; and determining the duty cycles of the switching devices in the converter based on the control loop with the minimum output value.

In an example, the output value of direct current bus voltage control loop represents a duty cycle of the direct current bus voltage control loop; and the output value of direct current bus current control loop represents a duty cycle of the direct current bus current control loop.

In an example, when the actual voltage at the direct current bus side decreases, the output value of the direct current bus voltage control loop becomes the minimum output value, to control the direct current bus voltage based on the duty cycle of the direct current bus voltage control loop as the duty cycle of the switching devices in the converter.

In an example, when the actual voltage at the direct current bus side is lower than the bus reference voltage, the duty cycle of the direct current bus voltage control loop is increased by a PI controller, the on-time of the switching device is prolonged, and energies are transferred to the direct current bus capacitor from the battery side.

In an example, when the actual voltage at the direct current bus side is excessively high, the duty cycle of the direct current bus voltage control loop is decreased by the PI controller, and the on-time of the switching device is shortened.

In an example, when the actual current at the direct current bus side increases, the output value of the direct current bus current control loop becomes the minimum output value, to control the direct current bus current based on the duty cycle of the direct current bus current control loop as the duty cycle of the switching devices in the converter.

In an example, when the actual current at the direct current bus side exceeds the bus reference current, the duty cycle of the direct current bus current control loop is decreased by a PI controller, the on-time of the switching device is shortened, and the current increasing is limited.

In an example, when the actual current at the direct current bus side is lower than the bus reference current, the duty cycle of the direct current bus current control loop is increased by the PI controller, the on-time of the switching devices is prolonged, and the current rises.

In an example, the controlling the charging current of the battery, the charging voltage of the battery, the direct current bus current or the direct current bus voltage by controlling the on-time ratio of the switching devices in the converter, based on the actual voltage and current at the direct current bus side and the actual output voltage and current at the battery side is performed periodically.

According to another embodiment of the present invention, there is further provided an apparatus for controlling an energy storage subsystem in a direct current microgrid, including: a memory; and a processor coupled to the memory and configured to perform any of the aforementioned methods.

Therefore, according to the embodiments of the present invention, the energy storage subsystem could take both controlling of the direct current bus voltage and the direct current bus current in a charging state into consideration and take both controlling of the voltage and the current at the battery side in a discharging state into consideration, thus improving a stability of the direct current microgrid system.

### BRIEF DESCRIPTION OF THE DRAWINGS

The present invention will be more easily understood through the following detailed description with the help of the accompanying drawings, in which the same reference numerals designate units of the same structure, and in which:
FIG. 1 is a schematic diagram illustrating a direct current microgrid system according to an embodiment of the present invention;
FIG. 2 illustrates a schematic diagram in a case that a direct current microgrid operates in a charging mode according to an embodiment of the present invention;
FIG. 3 illustrates a schematic flowchart of a control method for an energy storage subsystem of a direct current microgrid according to an embodiment of the present invention;
FIG. 4 illustrates a schematic diagram of applying a method at an energy storage subsystem side according to an embodiment of the present invention;
FIG. 5 illustrates a schematic diagram of a detailed control process for an energy storage subsystem of a direct current microgrid according to an embodiment of the present invention; and
FIG. 6 illustrates a schematic block diagram of an apparatus for controlling an energy storage subsystem in a direct current microgrid according to an embodiment of the present invention.

### DETAILED DESCRIPTION

The technical scheme in the embodiments of the present invention will be clearly and completely described below with reference to the drawings in the embodiments of the present invention. Obviously, the described embodiments are a part of the embodiments of the present invention, but not all of the embodiments. Based on the embodiments in the present invention, all other embodiments obtained by a person of ordinary skill in the art without inventive effort belong to the scope of protection of the present invention.

Furthermore, it should be noted that in the specification, A connected to B may mean "A directly connected to B" or "A connected to B via other middleware". A connected between B and C may mean "A directly connected to A and B" or "A connected to B and C via other middleware".

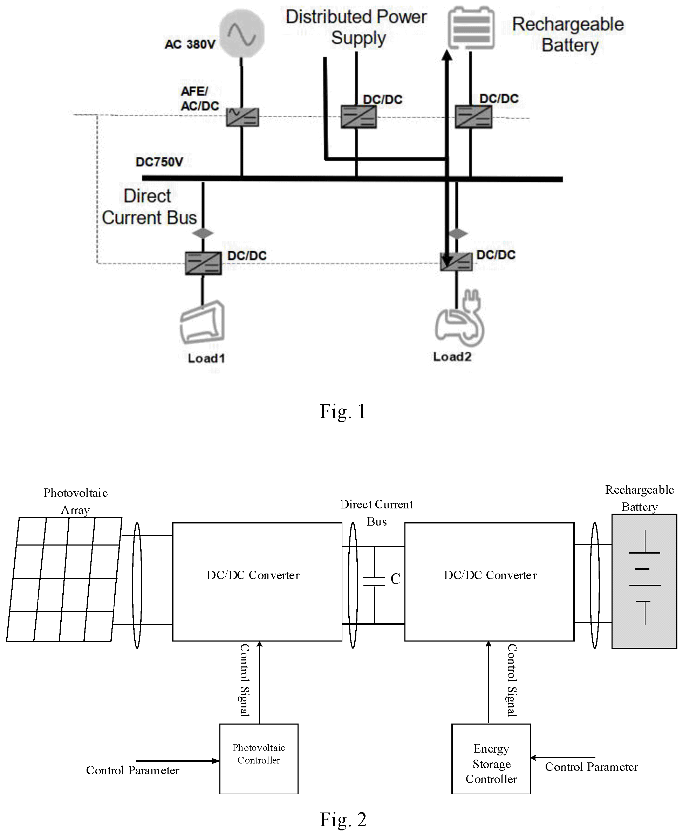

FIG. 1 is a schematic diagram showing a direct current microgrid system according to an embodiment of the present invention.

As shown in FIG. 1, a direct current microgrid system may include a distributed power supply, an energy storage subsystem including a rechargeable battery, and a plurality of loads (e.g., Load 1 and Load 2), and the distributed power supply, the energy storage subsystem, and the plurality of loads are connected via a direct current bus. In addition, the direct current bus may also be connected to an alternating current power grid through a bidirectional direct current (DC) - alternating current (AC) converter.

Although FIG. 1 illustrates one distributed power supply, one energy storage subsystem and two loads, those skilled in the art could understand that the numbers of the distributed power supplies, the energy storage subsystems and the loads are not limited thereto.

In addition, although FIG. 1 illustrates a voltage of an alternating current power supply as 380V and a voltage of the direct current bus as 750V, those skilled in the art could understand that this is only an example, and the embodiments of the present invention are not limited thereto.

FIG. 2 illustrates a schematic diagram in a case that a direct current microgrid operates in a charging mode according to an embodiment of the present invention.

As shown in FIG. 2, in the charging mode, the rechargeable battery is charged by a distributed power source such as a photovoltaic array. A photovoltaic controller in a photovoltaic system and an energy storage controller in an energy storage subsystem control respective DC-DC converters based on their respective control parameters.

Hereinafter, the embodiments of the present invention will be described in detail by taking the photovoltaic array as an example of the distributed power supply, but those skilled in the art should understand that the embodiments of the present invention are not limited thereto.

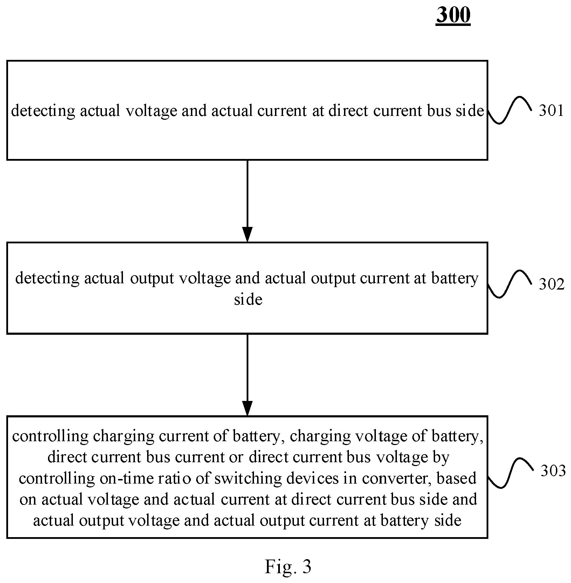

FIG. 3 illustrates a schematic flowchart of a control method 300 for an energy storage subsystem of a direct current microgrid according to an embodiment of the present invention.

As shown in FIG. 3, at 301 of the method 300, an actual voltage and an actual current at a direct current bus side may be detected. At 302, an actual output voltage and an actual output current at a battery side may be detected. At 303, a charging current of the battery, a charging voltage of the battery, a direct current bus current or a direct current bus voltage may be controlled by controlling an on-time ratio(s) of a switching devices in a converter, based on the actual voltage and the actual current at the direct current bus side and the actual output voltage and the actual output current at the battery side.

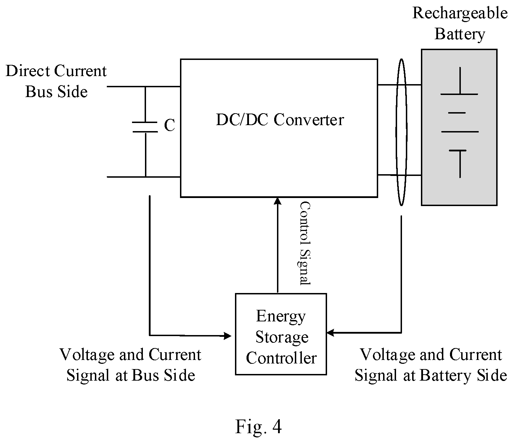

FIG. 4 illustrates a schematic diagram of applying the method 300 at an energy storage subsystem side according to an embodiment of the present invention.

As shown in FIGS. 3 and 4, in addition to detecting the actual output voltage and the actual output current at the battery side, the control method according to the embodiment of the present invention may further detect the actual voltage and the actual current at the direct current bus side, and perform controlling according to the actual voltage and the actual current at the direct current bus side and the actual output voltage and the actual output current at the battery side at the same time.

Therefore, according to the embodiments of the present invention, the energy storage subsystem could be caused to take both controlling of the direct current bus voltage and the direct current bus current in a charging state into consideration and take both controlling of the voltage and the current at the battery side in a discharging state into consideration, thus improving a stability of the direct current microgrid system.

For example, in a charging state, the bus voltage may be maintained being stable even if a power at the bus side fluctuates, and in a discharging state, the bus voltage may also be maintained being stable even when loads are suddenly increased on the direct current bus.

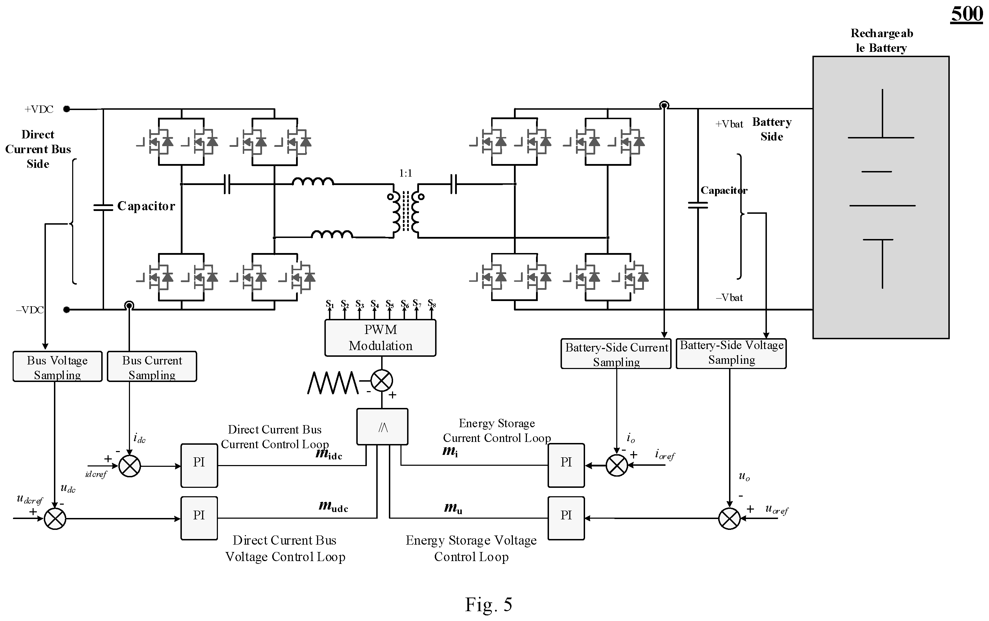

Next, a control process for the energy storage subsystem of the direct current microgrid according to the embodiment of the present invention will be described in detail with reference to FIG. 5.

FIG. 5 illustrates a schematic diagram of a detailed control process 500 for an energy storage subsystem of a direct current microgrid according to an embodiment of the present invention.

As shown in FIG. 5, detecting the actual voltage at the direct current bus side may include detecting a voltage across a direct current bus capacitor as the actual voltage at the direct current bus side. For example, the voltage across the direct current bus capacitor is sampled to obtain an actual voltage u_{dc} at the direct current bus side.

In addition, detecting the actual current of the direct current bus may include detecting a current on the direct current bus as the actual current at the direct current bus side. For example, the current on the direct current bus is sampled to obtain an actual current i_{dc} at the direct current bus side.

Similarly, detecting the actual output voltage at the battery side may include detecting a voltage across a capacitor at the battery side as the actual output voltage at the battery side. For example, the voltage across the capacitor at the battery side is sampled to obtain an actual output voltage uₒ at the battery side.

Further, detecting the actual output current at the battery side may include detecting a current at the battery side as the actual output current at the battery side. For example, a current on a line connected to the battery is sampled to obtain an actual output current iₒ at the battery side.

Then, the actual voltage u_{dc} at the direct current bus side may be input to a direct current bus voltage control loop, the actual current i_{dc} at the direct current bus side may be input to a direct current bus current control loop, the actual output voltage uₒ at the battery side may be input to an energy storage voltage control loop, and the actual output current iₒ at the battery side may be input to an energy storage current control loop.

The charging current of the battery, the charging voltage of the battery, the direct current bus current or the direct current bus voltage may be controlled by controlling the on-time ratio(s) of the switching devices in the converter (e.g., a DC/DC converter), based on one of the direct current bus voltage control loop, the direct current bus current control loop, the energy storage voltage control loop and the energy storage current control loop.

In an example, a bus reference voltage u_{dcref} of the direct current bus voltage control loop may indicate a lowest acceptable bus voltage, for example, 600V. In an example, a bus reference current i_{dcref} of the direct current bus current control loop may indicate a maximum acceptable bus current, and may depend on a damage current of the switching device in the converter. In an example, a reference voltage u_{oref} of the energy storage voltage control loop may indicate a highest acceptable battery voltage, and a reference current i_{oref} of the energy storage current control loop may indicate a maximum acceptable battery current.

In an example, the controlling the charging current of the battery, the charging voltage of the battery, the direct current bus current or the direct current bus voltage by controlling the on-time ratio of the switching devices in the converter, based on one of the direct current bus voltage control loop, the direct current bus current control loop, the energy storage voltage control loop and the energy storage current control loop may include: determining output values of the direct current bus voltage control loop, the direct current bus current control loop, the energy storage voltage control loop and the energy storage current control loop; determining a minimum output value among the output values of the direct current bus voltage control loop, the direct current bus current control loop, the energy storage voltage control loop and the energy storage current control loop; determining a duty cycle of the switching devices in the converter based on the control loop with the minimum output value; and determining the on-time ratio of the switching devices in the converter based on the determined duty cycle to control a corresponding one of the charging current of the battery, the charging voltage of the battery, the direct current bus current and the direct current bus voltage.

As shown in FIG. 5, in the direct current bus voltage control loop, the actual voltage u_{dc} at the direct current bus side may be compared with the bus reference voltage u_{dcref}, and m_{udc} may be output through a PI (proportional-integral) controller. The output value m_{udc} of the direct current bus voltage control loop may represent a duty cycle of the direct current bus voltage control loop. In the direct current bus current control loop, the actual current i_{dc} at the direct current bus side is compared with the bus reference current i_{deref}, and m_{idc} is output through a PI controller. The output value m_{idc} of the direct current bus current control loop may represent a duty cycle of the direct current bus current control loop.

Similarly, the energy storage voltage control loop may output an output value mᵤ, and the energy storage current control loop may output an output value mᵢ.

A minimum value among the m_{udc}, m_{idc}, mᵤ and mᵢ may be used to control the on-time ratio of the switching devices in the converter, and then control the corresponding one of the charging current of the battery, the charging voltage of the battery, the direct current bus current or the direct current bus voltage.

In case that the m_{udc} is the minimum value, the direct current bus voltage control loop realizes a stability of the bus voltage through a closed-loop negative feedback. Particularly, the actual voltage u_{dc} of the direct current bus may be detected in real time, and compared with the bus reference voltage u_{deref} to generate an error signal, which is processed by the PI controller to output a duty cycle instruction. The duty cycle may directly control the on-time ratio of the switching devices in the converter.

In case that the actual voltage m_{udc} of direct current bus is lower than the bus reference voltage u_{dcref}, the PI controller increases the duty cycle, prolongs the on-time of the switching devices, and causes more energy to be transferred to the direct current bus capacitor from the battery side, thereby forcing the voltage to rise. On the contrary, if the voltage is excessively high, the duty cycle may be decreased and energy transferring is reduced. In this process, a proportional term (P) of the PI controller quickly responds to a voltage deviation, and an integral term (I) gradually eliminates a steady-state error. Finally, by dynamically adjusting the duty cycle, an energy input and load consumption at the direct current bus side are balanced in real time, so that the bus voltage is accurately stabilized to be close to a set value (e.g., the bus reference voltage u_{dcref}). At this time, the duty cycle of the direct current bus voltage control loop may be used as the duty cycle of the switching devices in the converter.

In an example, in case that the converter as shown in FIG. 5 is a Dual Active Bridge (DAB) converter, the duty cycle may be a phase shift angle of the DAB converter. The phase shift angle may directly control a phase difference of driving signals of a full bridge on both sides of the DAB, thereby adjusting power transmitted from the battery side to the bus side. When the bus voltage drops due to a sudden increase in the load, the PI controller increases the phase shift angle, and causes the DAB to transmit more energy to the direct current bus capacitor, thereby forcing the voltage to rise. On the contrary, if the bus voltage is excessively high, the phase shift angle is decreased to reduce power transmission and maintain dynamic energy balance. In this process, the proportional term (P) of the PI controller quickly responds to the voltage deviation, and the integral term (I) eliminates the steady-state error. Finally, the bus voltage always converge to a reference value, thereby realizing the stable control of an adaptive load change.

In case that the m_{idc} is the minimum value, the direct current bus current control loop realizes the accurate control of the bus current through a closed-loop negative feedback mechanism. Particularly, the actual current i_{dc} at the direct current bus side may be detected in real time, and compared with the bus reference current i_{deref} to generate a current error signal, which is processed by the PI controller to output a duty cycle instruction. The duty cycle directly controls the on-time ratio of the switching devices in the converter.

When the actual current i_{dc} of the direct current bus is lower than the bus reference current i_{deref}, the PI controller increases the duty cycle, prolongs the on-time of the switching devices, and causes energy storage of an inductor to be increased or an energy transferring rate to be improved, thereby forcing the current to rise. On the contrary, when the actual current i_{dc} of the direct current bus exceeds the bus reference current i_{deref}, the duty cycle may be decreased and the on-time may be shortened to limit the current increasing. In this process, the proportional term (P) of the PI controller quickly responds to the current deviation and suppresses a transient fluctuation, and the integral term (I) gradually eliminates the steady-state error, thereby ensuring the current tracks the reference value without a static error. At this time, the duty cycle of the direct current bus current control loop may be used as the duty cycle of the switching devices in the converter.

By dynamically adjusting the duty cycle, the system could balance the output at the power supply side and load demand in real time, and finally stabilize the bus current at the target value to adapt to the operating conditions such as a sudden change in the load or an input voltage fluctuation.

In an example, the controlling the charging current of the battery, the charging voltage of the battery, the direct current bus current or the direct current bus voltage by controlling the on-time ratio of the switching devices in the converter, based on the actual voltage and the actual current at the direct current bus side and the actual output voltage and the actual output current at the battery side may be performed periodically. For example, the control method for the energy storage subsystem of the direct current microgrid according to the embodiment of the present invention may be performed periodically with an interruption period as a predetermined period.

### Case of Normal Charging

When the voltage of the direct current bus is normal and stable, for example, 750V, the rechargeable battery may be charged normally. At this time, the output value m_{idc} of the direct current bus current control loop and the output value m_{udc} of the direct current bus voltage control loop are both large.

At the beginning of charging, the battery voltage is small, a difference between the reference voltage u_{oref} and the actual output voltage uₒ at the battery side is large, and mᵤ is large. On the other hand, a difference between the reference current i_{oref} and the actual output current iₒ at the battery side is small, and mᵢ is small, so that the mᵢ is the minimum value among the m_{udc}, m_{idc}, mᵤ and mᵢ, and dominates. At this time, the charging current of the battery is controlled based on the energy storage current control loop, a constant current charging is performed, and the battery voltage uₒ increases gradually. This is a constant current charging stage.

As the battery voltage uₒ increases gradually, the mᵤ decreases gradually until the mᵤ is less than mᵢ, so that the mᵤ is the minimum value among the m_{udc}, m_{idc}, mᵤ and mᵢ, and dominates. At this time, the charging voltage of the battery is controlled based on the energy storage voltage control loop, a constant voltage charging is performed, and the current decreases gradually. This is a constant voltage charging stage.

Hereinafter, during the constant voltage charging stage, the charging current decreases gradually until it is less than 5%, and the charging current is cut off, then the charging process completes.

### Case of Direct Current Bus Voltage Decrease

When the actual voltage u_{dc} at the direct current bus side decreases, the output value m_{ude} of the direct current bus voltage control loop may become the minimum output value. At this time, the direct current bus voltage may be controlled not to decrease any more based on the direct current bus voltage control loop to ensure the stability of the bus voltage.

It is assumed that a target voltage of the direct current bus is set to 750V, the battery voltage is set to 750V, a target charging current of the battery is set to 20A, and the bus reference voltage u_{dcref} may be set to 600V. Those skilled in the art should understand that the specific values of the respective parameters may be set according to actual requirements.

In a case of weak photovoltaic, the actual current i_{dc} at the direct current bus side may be 5A. At this time, the actual voltage u_{dc} at the direct current bus side, that is, a capacitor voltage at the direct current bus side, decreases to be below 750V, thereby gradually approaching the bus reference voltage u_{deref}. At this time, the m_{udc} becomes the minimum value among the m_{udc}, m_{idc}, mᵤ and mᵢ, and dominates, so that the direct current bus voltage may be controlled not to decrease any more and to be stabilized at u_{dcref} based on the output value m_{udc} of the direct current bus voltage control loop.

In this case, the charging current may be adapted to 5A, which avoids the bus voltage being too low. The photovoltaic may fluctuate arbitrarily in a range of 20A, and the charging power of the battery may be adaptive.

Therefore, the bus voltage may be ensured to be stable even in case of an input power fluctuation in the charging state, overheating and overcurrent of the load of constant power could be avoided, and a problem of apparatus shutdown caused by the bus voltage fluctuation is avoided, thereby improving the stability of the direct current microgrid system.

### Case of Load Fluctuation on Direct Current Bus

When the load is suddenly increased on the direct current bus (greater than a photovoltaic power), at this time, the energy storage DC/DC converter switches to discharging from charging. If the suddenly increased load is too heavy, it may cause overcurrent protection of the DC/DC converter, so that the energy storage converter will be off-grid, resulting in a larger bus power deficit and a larger bus voltage drop of the system. In severe cases, other apparatuses on the bus shut down.

According to the embodiment of the present invention, when the actual current i_{dc} at the direct current bus side increases, the output value m_{idc} of the direct current bus current control loop becomes the minimum output value to control the direct current bus current based on the direct current bus current control loop.

Therefore, according to the embodiment of the present invention, with the direct current bus voltage control loop, the bus voltage could be maintained to be stable even if the power at the bus side fluctuates in the charging state, and the problems of overcurrent, overheating and even under-voltage protection of the apparatuses on the bus caused by the bus voltage fluctuation could be avoided. In addition, with the direct current bus current control loop, the case that overcurrent protection instantly occurs to be off-grid after the heavy load is suddenly increased on the bus could be avoided.

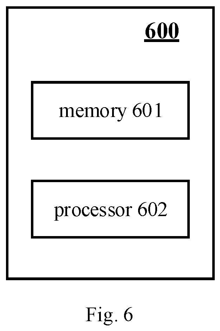

FIG. 6 illustrates a schematic block diagram of an apparatus 600 for controlling an energy storage subsystem in a direct current microgrid according to an embodiment of the present invention.

As shown in FIG. 6, the apparatus 600 may include a memory 601 and a processor 602. The memory 601 may store various data required by the apparatus 600, and the processor 602 is coupled with the memory 601 and configured to perform the methods described above with reference to FIGS. 1 and 5.

A person of ordinary skill in the art can realize that the units and algorithm steps of each embodiment described in connection with the embodiments disclosed in the present invention can be implemented by electronic hardware, computer software or a combination of the two. In order to clearly illustrate the interchangeability of hardware and software, the components and steps of each embodiment have been generally described according to functions in the above description. Whether these functions are performed in hardware or software depends on the specific application and design constraints of the technical scheme. Skilled people can use different methods to realize the described functions for each specific application, but such realization should not be considered beyond the scope of the present invention.

It can be clearly understood by those skilled in the art that for the convenience and conciseness of description, the specific working processes of the systems, apparatuses and units described above can refer to the corresponding processes in the aforementioned method embodiments, and will not be repeated here.

In several embodiments provided by the present invention, it should be understood that the disclosed systems, apparatuses and methods can be implemented in other ways. For example, the apparatus embodiment described above is only schematic. For example, the division of the units is only a logical function division. In actual implementation, there may be other division methods, for example, multiple units or components can be combined or integrated into another system, or some features can be ignored or not performed. On the other hand, the mutual coupling or direct coupling or communication connection shown or discussed can be indirect coupling or communication connection through some interfaces, apparatuses or units, which can be electrical, mechanical or other forms.

The units described as separate parts may or may not be physically separated, and the parts displayed as units may or may not be physical units, which may be located in one place or distributed to multiple network units. Some or all of the units can be selected according to actual requirements to achieve the purpose of the embodiments.

In addition, each functional unit in each embodiment of the present invention may be integrated into one processing unit, or each unit may exist physically alone, or two or more units may be integrated into one unit. The above integrated units can be implemented in the form of hardware or software functional units.

The integrated units can be stored in a computer-readable storage medium if they are implemented in the form of software functional units and sold or used as independent products. Based on this understanding, the technical solution of the present invention essentially or a part thereof that contributes to the prior art or in whole or in part can be embodied in the form of a software product, which is stored in a storage medium and includes several instructions to cause a computer device (which may be a personal computer, a server, or a network device, etc.) to perform all or part of the steps of the methods described in various embodiments of the present invention. The aforementioned storage medium includes: U disk, mobile hard disk, Read-Only Memory (ROM), Random Access Memory (RAM), magnetic disk or optical disk and other media that can store program codes.

The above descriptions are only the specific implementations of the present invention, but the scope of protection of the present invention is not limited thereto. Any person familiar with the technical field can easily think of changes or substitutions within the technical scope disclosed by the present invention, which should be included in the scope of protection of the present invention. Therefore, the scope of protection of the present invention should be based on the scope of protection of the claims.

## Claims

1. A control method for an energy storage subsystem of a direct current microgrid, the method comprising:
detecting (301) an actual voltage and an actual current at a direct current bus side;
detecting (302) an actual output voltage and an actual output current at a battery side; and
controlling (303) at least one of a charging current of the battery, a charging voltage of the battery, a direct current bus current or a direct current bus voltage by controlling an on-time ratio of a switching devices in a converter, based on the actual voltage and the actual current at the direct current bus side and the actual output voltage and the actual output current at the battery side.

2. The control method of claim 1, wherein the detecting the actual voltage at the direct current bus side comprises detecting a voltage across a direct current bus capacitor as the actual voltage at the direct current bus side; and
wherein detecting the actual current of the direct current bus side comprises detecting a current on the direct current bus as the actual current at the direct current bus side.

3. The control method of claim 2, wherein the controlling the at least one of the charging current of the battery, the charging voltage of the battery, the direct current bus current or the direct current bus voltage by controlling an on-time ratio of switching devices in a converter, based on the actual voltage and the actual current at the direct current bus side and the actual output voltage and the actual output current at the battery side, comprises:
inputting the actual voltage at the direct current bus side to a direct current bus voltage control loop;
inputting the actual current at the direct current bus side to a direct current bus current control loop;
inputting the actual output voltage at the battery side to an energy storage voltage control loop;
inputting the actual output current at the battery side to an energy storage current control loop;
determining a duty cycle of the switching devices in the converter based on one of the direct current bus voltage control loop, the direct current bus current control loop, the energy storage voltage control loop and the energy storage current control loop; and
determining an on-time ratio of the switching devices in the converter based on the determined duty cycle to control a corresponding one of the charging current of the battery, the charging voltage of the battery, the direct current bus current and the direct current bus voltage.

4. The control method of claim 3, wherein a bus reference voltage of the direct current bus voltage control loop indicates a lowest acceptable bus voltage, a bus reference current of the direct current bus current control loop indicates a maximum acceptable bus current, a reference voltage of the energy storage voltage control loop indicates a highest acceptable battery voltage, and a reference current of the energy storage current control loop indicates a maximum acceptable battery current.

5. The control method of claim 4, wherein the determining the duty cycle of the switching devices in the converter based on one of the direct current bus voltage control loop, the direct current bus current control loop, the energy storage voltage control loop and the energy storage current control loop comprises:
determining output values of the direct current bus voltage control loop, the direct current bus current control loop, the energy storage voltage control loop and the energy storage current control loop;
determining a minimum output value among the output values of the direct current bus voltage control loop, the direct current bus current control loop, the energy storage voltage control loop and the energy storage current control loop; and
determining the duty cycle of the switching devices in the converter based on the control loop with the minimum output value.

6. The control method of claim 5, wherein:
the output value of direct current bus voltage control loop represents a duty cycle of the direct current bus voltage control loop; and
the output value of direct current bus current control loop represents a duty cycle of the direct current bus current control loop.

7. The control method of claim 6, wherein when the actual voltage at the direct current bus side decreases, the output value of the direct current bus voltage control loop becomes the minimum output value, to control the direct current bus voltage based on the duty cycle of the direct current bus voltage control loop as the duty cycle of the switching devices in the converter.

8. The control method of claim 7, wherein when the actual voltage at the direct current bus side is lower than the bus reference voltage, the duty cycle of the direct current bus voltage control loop is increased by a proportional-integral, PI, controller, the on-time of the switching devices is prolonged, and energy is transferred to the direct current bus capacitor from the battery side.

9. The control method of claim 8, wherein when the actual voltage at the direct current bus side is excessively high, the duty cycle of the direct current bus voltage control loop is decreased by the PI controller, and the on-time of the switching devices is shortened.

10. The control method of any of claims 6 to 9, wherein when the actual current at the direct current bus side increases, the output value of the direct current bus current control loop becomes the minimum output value, to control the direct current bus current based on the duty cycle of the direct current bus current control loop as the duty cycle of the switching devices in the converter.

11. The control method of claim 10, wherein when the actual current at the direct current bus side exceeds the bus reference current, the duty cycle of the direct current bus current control loop is decreased by a PI controller, the on-time of the switching devices is shortened, and current increasing is limited.

12. The control method of claim 11, wherein when the actual current at the direct current bus side is lower than the bus reference current, the duty cycle of the direct current bus current control loop is increased by the PI controller, the on-time of the switching devices is prolonged, and the current rises.

13. The control method of any of claims 1 to 12, wherein the controlling the at least one of the charging current of the battery, the charging voltage of the battery, the direct current bus current or the direct current bus voltage by controlling the on-time ratio of the switching devices in the converter, based on the actual voltage and current at the direct current bus side and the actual output voltage and current at the battery side, is performed periodically.

14. An apparatus (600) for controlling an energy storage subsystem in a direct current microgrid, the apparatus (600) comprising:
a memory (601); and
a processor (602) coupled to the memory (601) and configured to perform the method of any of claims 1 to 13.
